# NEUE EUROPÄISCHE PATENTSCHRIFT

(11) **EP 0 224 023 B2**
(45) Veröffentlichungstag und Bekanntmachung des Hinweises auf die Entscheidung über den Einspruch: **23.03.1994**
(45) Hinweis auf die Patenterteilung: 16.08.1990
(21) Anmeldenummer: 86114559.7
(22) Anmeldetag: 21.10.1986
(51) Int. Cl.: B63B 5/24, B63B 35/79

(54) **Verbundkörper, insbesondere Segel- oder Wellenreitbrett, sowie Verfahren zur Herstellung desselben**
Compound structure, especially a sail board or surf board, and its manufacturing process
Structure composite, notamment planche à voile ou de surf aussi bien que procédé pour sa fabrication

(30) Priorität: 23.10.1985 DE 3537703
(43) Veröffentlichungstag der Anmeldung: 03.06.1987
(73) Patentinhaber: Georg Fritzmeier GmbH & Co., D-85655 Grosshelfendorf (DE)
(72) Erfinder: Frank, Wolfgang, D-8206 Bruckmühl (DE)
(74) Vertreter: Tiedtke, Harro, Dipl.-Ing.

(56) Entgegenhaltungen:
- EP-A- 0 069 076
- WO-A-82/04023
- WO-A-83/00127
- WO-A-85/00755
- CH-A- 597 032
- DE-A- 2 928 579
- DE-A- 3 329 230
- DE-A- 3 417 217
- DE-C- 3 118 631
- US-A- 4 278 720

## Beschreibung

Die Erfindung bezieht sich auf einen Verbundkörper gemäß dem Oberbegriff des Anspruchs 1 sowie ein Verfahren zur Herstellung desselben.

In der DE-OS 33 29 230 ist ein Verbundkörper dieser Art in Form eines Segelbretts beschrieben, dessen Schale eine gewebeverstärkte, allenfalls geringfügig verschäumte Kunstharzschicht und ggf. eine thermoplastische Oberflächenschicht aufweist. Eine derartige gewebeverstärkte Kunstharzschicht kann relativ dünn gehalten werden, z. B. 1,5 mm dick, und laßt insbesondere in Verbindung mit einer dünnen thermoplastischen Oberflächenschicht, z.B. 0,4 mm dick, ein leichtes, biegesteifes Segelbrett erzielen, das auch die erforderliche Trittfestigkeit besitzt.

Der Erfindung liegt die Aufgabe zugrunde, einen Verbundkörper gemäß dem Oberbegriff des Anspruchs 1 derart weiterzubilden, daß er sich ohne Einbuße an Steifigkeit und Festigkeit durch noch geringeres Gewicht auszeichnet.

Diese Aufgabe wird erfindungsgemäß mit den im kennzeichnenden Teil des Anspruchs 1 aufgeführten Merkmalen gelöst.

Die Schale weist also eine Sandwichstruktur aus zwei auf Abstand zueinander befindlichen harten gewebeverstärkten Kunstharzzonen und einer von dem kunstharzdurchsetzten Schaumvlies gebildeten, schaumkernartigen Zwischenzone auf. Ein derartiges dreizoniges Schalenlaminat ist zwar etwas dicker als die gewebeverstärkte Kunstharzschicht von gemäß der DE-OS 33 29 230 hergestellten Verbundkörpern, seine Biegesteifigkeit liegt jedoch um soviel höher, daß die Schale und darüberhinaus auch der Schaumkem insgesamt jeweils deutlich leichter gehalten werden können, ohne daß eine Einbuße an Steifigkeit und Belastbarkeit des Verbundkörpers hingenommen werden müßte. Die Ausbildung der drei Lagen in Form einer Schichtmatte wobei die drei Lagen der Schichtmatte miteinander vernadelt, versteppt oder verklebt. Sind und die Schichtmatte mit Harz begossen wird, gewährleistet einen definierten Abstand der beiden äußeren Gewebelagen des Laminats und erleichtert eine rationelle Fertigung des Verbundkörpers.

Als Kunstharz ist insbesondere treibmittelfreies Kunstharz vorgesehen, so daß durch die beiden harten gewebeverstärkten Kunstharzzonen und die schaumkemartige Zwischenzone ein Höchstmaß an Biegesteifigkeit des Schalenlaminats erreicht wird.

Ein sehr rationelles Verfahren zur Herstellung eines solchen Verbundkörpers ist dadurch gegeben, daß zunächst die Schichtmatte durch Einfügen einer Schaumvliesstoffmatte zwischen zwei Gewebelagen und Vemadeln, Versteppen oder Verkleben dieser drei Lagen miteinander vorgefertigt und anschließend der vorgefertigte Schaumkern damit belegt wird, worauf in bekannter Weise das Kunstharz auf beiden Seiten des Schaumkems auf die Schichtmatte aufgegossen und das auf diese Weise entstehende Schalenlaminat auf dem Schaumerkern in einer geschlossenen, ggf. bereits mit einer Oberflächenschicht ausgekleideten Form zum Aushärten gebracht wird. Durch die Vorfertigung der Schichtmatte wird die Taktzeit bei der Herstellung des Verbundkörpers durch die Mehrschichtigkeit des Schalenlaminats gegenüber der herkömmlichen Verwendung einer Fasermatte oder eines Fasergewebes nicht verlängert.

Vorteilhafte Weiterbildungen der Erfindung sind Gegenstand der Unteransprüche.

Die Erfindung wird nachstehend anhand von Ausführungsbeispielen unter Bezugnahme auf die Zeichnung näher erläutert. Es zeigen:
Fig. 1 eine Schichtmatte für das Schalenlaminat des erfindungsgemäßen Verbundkörpers und
Fig. 2 eine schematische, stark vergrößerte Teilschnittdarstellung des Verbundkörpers.

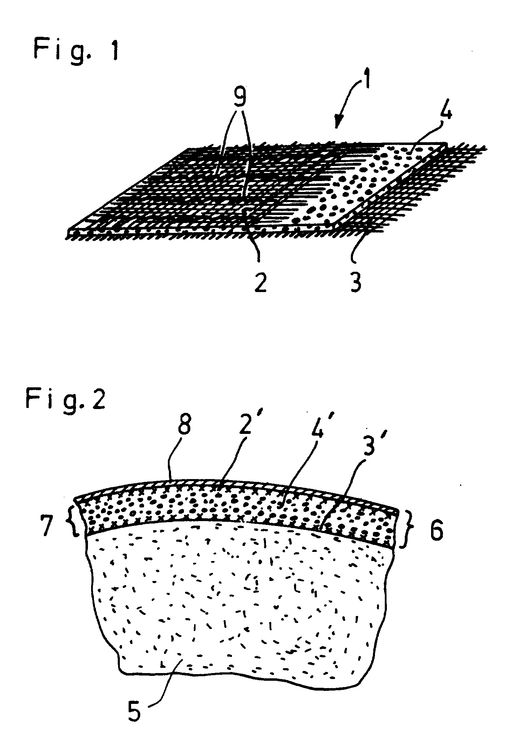

Fig. 1 zeigt eine Schichtmatte 1 die aus zwei Gewebelagen 2 und 3 und einer Zwischenlage 4 in Form einer Schaumvliesstoffmatte besteht Für die Gewebelagen 2 und 3 ist Gewebe aus Glasfaser, Aramidfaser, Polyamidfaser, Polyesterfaser oder Kohlefaser. vorgesehen. Es kann sich auch um Glasfasergewebe handeln, das durch Aramidfasem oder Kohlefasern verstärkt ist Die Verstärkungsfasem verlaufen dann zweckmäßig in Richtung erhöhter Zugbelastung. Für die Zwischenlage 4 kann handelsüblicher Schaumvliesstoff in Mattenform verwendet werden. Beispielsweise kann es sich um Polyestervlies mit Mikrohohlperlen handeln, die ca. 50 % des Vliesvolumens einnehmen. Die Vliesstoffmattendicke beträgt zwischen 1 und 3 mm, vorteilhaft 2 mm.

Die drei Lagen 2, 3 und 4 sind miteinander vemadelt, versteppt oder verklebt, was in Fig. 1 mit den Nähten 9 angedeutet ist, so daß eine leicht handhab- und zuschneidbare vorgefertigte Schichtmatte 1 vorliegt und die relative Lage der beiden Gewebelagen 2 und 3 und der Zwischenlage 4 im Laminat des herzustellenden Verbundkörpers definiert ist.

Der in Fig. 2 gezeigte Verbundkörper besteht aus einem Schaumkem 5 und einer Schale 6 in Form einer gewebeverstärkten Kunstharzschicht 7 mit einer thermoplastischen Oberflächenschicht 8.

Zur Herstellung des Verbundkörpers wird der vorgefertigte Schaumkem 5, der beispielsweise aus EPS-Schaum besteht, mit der Schichtmatte 1 belegt Wenn es sich bei dem Verbundkörper um ein Segelbrett handelt, werden zwei Mattenelemente entsprechend dem Aufriß des Segelbretts geschnitten und auf die Oberseite und die Unterseite des vorgefertigten Schaumkems genadelt Die beiden Mattenelemente können einander im Bereich der umlaufenden Kante des Segelbretts überlappen. Der Bereich der umlaufenden Kante kann aber auch unbesetzt von den Mattenelementen bleiben und zuvor mit Gewebestreifen oder dergleichen belegt werden. Die Mattenelemente werden vorteilhaft so zugeschnitten, daß die Gewebefasem bei Verwendung von Leinwandgewebestruktur in Brettlängsund Brettquerrichtung verlaufen. Bei Verwendung von Unidirektionalgewebe soll die Faserrichtung in Brettlängsrichtung verlaufen. Ebenso sollen evtl. in die beiden Gewebelagen 2, 3 der Schichtmatte 1 eingearbeitete, der Verstärkung dienende Kohlefasern oder Aramidfasern in Brettlängsrichtung orientiert sein.

Auf den mit der Schichtmatte 1 besetzten Schaumkern 5 wird dann mit Hilfe eines Rechens flüssiges härtbares Kunstharz aufgegossen, so daß alle drei Lagen 2 bis 4 der Schichtmatte 1 gut durchtränkt werden. Dies geschieht auf beiden Kernseiten.

Als Kunstharz eignen sich beispielsweise Epoxyharz und Polyurethanharz, wobei Polyurethanharz vorzuziehen ist, da es billiger und seine Verarbeitung weniger gesundheitsschädlich ist.

Der Kern wird nun in die untere Formhälfte eines vorgewärmten Formwerkzeugs eingelegt und die Form geschlossen. Die beiden Formhälften des Formwerkzeugs sind bereits mit der Oberflächenschicht 8 in Form einer im Doppeltiefziehverfahren tiefgezogenen thermoplastischen Kunststoffhaut von z. B. 0,4 mm Dicke ausgekleidet. Bei bestimmten Verwendungsfällen des Verbundkörpers kann diese Oberflächenschicht entfallen. Sie ist allerdings hervorragend geeignet, das Schalenlaminat wirksam zu schützen und die Schlagfestigkeit der Schale 6 wesentlich zu erhöhen.

Durch den Druck der Presse verteilt sich das Kunstharz vollkommen in dem von der Schichtmatte 1 eingenommenen Volumen zwischen dem Schaumkern 5 und der Oberflächenschicht 8 und härtet zu der dreizonigen gewebeverstärkten Kunstharzschicht 7 aus, die mit der Oberflächenschicht 8 und dem Schaumkem 5 eine innige Verbindung eingeht. Ihre Dicke beträgt bei Verwendung einer 2 mm dicken Schaumvliesstoffmatte 4 ca. 2 mm. Der Aushärtevorgang findet bei einer Formwerkzeugtemperatur statt, die dem jeweils verwendeten Kunstharz angepaßt ist. Infolge der Mikrohohlperlen in der Schaumvliesstoffmatte 4 wird im Bereich dieser Matte eine Kunstharzzwischenzone 4' mit Schaumstruktur erhalten. Nach dem Aushärten wird der fertige Verbundkörper dem Formwerkzeug entnommen. Es werden dann lediglich noch die überstehenden Ränder der Oberflächenschicht 8 abgetrennt.

Dem verwendeten Kunstharz braucht prinzipiell kein Treibmittel beigegeben zu werden, da durch entsprechende Abmessungen des Schaumkerns 5 erreicht werden kann, daß beim Schließen des Formwerkzeugs ein gewisser Uberdruck in der Form auftritt. Durch die Verwendung von treibmittelfreiem Kunstharz entstehen im Bereich der beiden Gewebelagen 2 und 3 äußerst harte gewebeverstärkte Kunstharzzonen 2' und 3', die durch die Kunstharzschaumzone 4' als neutrale Zone im Bereich der Schaumvliesstoffmatte 4 in gegenseitigem Abstand gehalten werden, so daß die Kunstharzschicht 7 insgesamt äußerst biegesteif ist. Obwohl die Kunstharzschicht 7 infolge ihrer drei Zonen 2', 4' und 3' geringfügig dicker ist als einschichtiges Laminat von nach dem Verfahren gemäß der DE-OS 33 29 230 hergestellten Verbundkörpem, ist sie insgesamt bei höherer Steifigkeit dennoch leichter. Die höhere Steifigkeit der beschriebenen Kunstharzschicht 7 erlaubt wiederum eine Verringerung des Gewichts des Schaumkerns 5, so daß die Erfindung bei ihrer Anwendung auf Segelbretter insgesamt eine Gewichtsverringerung von ca. 2 kg bei einem Brettvolumen von ca. 180 l erlaubt.

Die Erfindung ist nicht nur auf Segel- oder Wellenreitbretter anwendbar, sondern auf großflächige Verbundkörper aller Art, wie z. B. Windabweiser für Kraftfahrzeuge, bei denen es auf hohe Steifigkeit und geringes Gewicht ankommt.

## Patentansprüche

1. Verbundkörper, insbesondere Segel- oder Wellenreitbrett, mit einem Schaumkern und einer Schale, die eine gewebeverstärkte Kunstharzschicht, auf die flüssiges härtbares Kunstharz aufgegossen wird,
und ggf. eine thermoplastische Oberflächenschicht aufweist, dadurch gekennzeichnet, daß für die gewebeverstärkte Kunstharzschicht eine Schichtmatte (1) aus zwei Gewebelagen (2, 3) und einer Zwischenlage (4) aus Schaumvliesstoff vorgesehen ist, wobei
die drei Lagen (2, 3, 4) der Schichtmatte (1) miteinander vernadelt, versteppt oder verklebt sind.

2. Verbundkörper nach Anspruch 1 oder 2, dadurch gekennzeichnet, daß als Kunstharz treibmittelfreies Kunstharz vorgesehen ist.

3. Verbundkorper nach einem der vorhergehenden Ansprüche, dadurch gekennzeichnet, daß die Zwischenlage (4) aus Polyestervlies mit Mikrohohlperlen besteht, deren Volumen etwa 50 % des Mattenvolumens beträgt.

4. Verbundkörper nach einem der vorhergehenden Ansprüche, dadurch gekennzeichnet, daß die Zwischenlage (4) 1 bis 3 mm, insbesondere 2 mm dick ist.

5. Verbundkörper nach einem der vorhergehenden Ansprüche, dadurch gekennzeichnet, daß die bei der Schichtmatte bei Belastung des Verbundkörpers auf Zug beanspruchte Gewebelage als Unidirektionalgewebe ausgebildet und mit ihrer Faserrichtung in Zugrichtung angeordnet ist.

6. Verbundkörper nach einem der vorhergehenden Ansprüche, dadurch gekennzeichnet, daß die Gewebelagen (2, 3) der Schichtmatte (1) aus Glasfaser, Aramidfaser, Polyamidfaser, Polyesterfaser oder Kohlefaser gewebt sind.

7. Verfahren zur Herstellung eines Verbundkörpers, insbesondere eines Segel- bzw. Wellenreitbretts, nach einem der vorhergehenden Ansprüche, bei dem ein Schaumkern vorgefertigt und mit Gewebe belegt wird, anschließend flüssiges härtbares Kunstharz auf beiden Seiten des Schaumkems auf das Fasergewebe aufgegossen und das auf diese Weise entstehende Schalenlaminat auf dem Schaumkem in einer geschlossenen, ggf. bereits mit einer thermoplastischen Oberflächenschicht ausgekleideten Form zum Aushärten gebracht wird, dadurch gekennzeichnet, daß der vorgefertigte Kern mit Gewebe in Form einer Schichtmatte belegt wird, die durch Einfügen einer Schaumvliesstoffmatte zwischen zwei Gewebelagen und Vemadeln, Versteppen oder Verkleben dieser drei Lagen miteinander vorgefertigt wird.

8. Verfahren zur Herstellung eines Segel- bzw. Wellenreitbretts nach Anspruch 8, dadurch gekennzeichnet, daß die Schichtmatte entsprechend dem Aufriß des Schaumkerns zugeschnitten und jeweils ein Mattenelement auf die Oberseite und die Unterseite des Schaumkerns aufgenadelt wird.

## Claims

1. Composite body, especially sailboard or surfboard, with a foam core and with a shell which has a fabric-reinforced synthetic resin layer onto which liquid curable synthetic resin is poured, and which has, if appropriate, a thermoplastic surface layer, **characterized in that** a laminated mat (1) consisting of two fabric plies (2, 3) and of an intermediate ply (4), of nonwoven foam material, is provided for the fabric-reinforced synthetic resin layer, wherein the three plies (2, 3, 4) of the laminated mat (1) are pinned, stitched or adhesively bonded to one another.

2. Composite body according to claim 1, **characterized in that** the synthetic resin is synthetic resin free of expanding agent.

3. Composite body according to one of the preceding claims, **characterized in that** the intermediate ply (4) consists of nonwoven polyester material with hollow microbeads, the volume of which amounts to approximately 50% of the volume of the mat.

4. Composite body according to one of the preceding claims, **characterized in that** the intermediate ply (4) is 1 to 3 mm, especially 2 mm, thick.

5. Composite body according to one of the preceding claims, **characterized in that** the fabric ply which, with the laminated mat, is subjected to tension when a load is exerted on the composite body is designed as unidirectional fabric and is arranged with its fibre direction in the direction of tension.

6. Composite body according to one of the preceding claims **characterized in that** the fabric plies (2, 3) of the laminated mat (1) are woven from glass fibre, aramid fibre, polyamide fibre, polyester fibre or carbon fibre.

7. Process for producing a composite body, especially a sailboard or surfboard, according to one of the preceding claims, in which a foam core is prefabricated and lined with fabric, subsequently liquid curable synthetic resin is poured onto the fibre fabric on both sides of the foam core, and the shell laminate thereby obtained is cured on the foam core in a closed mould already lined, if appropriate, with a thermoplastic surface layer, **characterized in that** the prefabricated core is covered with fabric in the form of a laminated mat which is prefabricated by the insertion of a nonwoven foam mat between two fabric plies and by pinning, stitching or adhesively bonding these three plies to one another.

8. Process for producing a sailboard or surfboard according to claim 7, **characterized in that** the laminated mat is cut according to the contour of the foam core and a mat element is pinned respectively onto the upper side and the underside of the foam core.

## Revendications

1. Corps composite, en particulier planche à voile ou planche de surf, comportant un noyau de mousse et une enveloppe qui comporte une couche de résine synthétique renforcée par du tissu, sur laquelle est coulée de la résine synthétique liquide durcissable, et éventuellement une couche superficielle thermoplastique, caractérisé en ce que, pour la couche de résine synthétique renforcée par du tissu, un mat stratifié (1) comprenant deux strates de tissu (2) et une couche intermédiaire (4) de matière mousse non tissée est prévu, dans lequel les trois strates (2, 3, 4) du mat stratifié (1) sont reliées entre elles par aiguilletage, piquage ou collage.

2. Corps composite selon la revendication 1, caractérisé en ce que l'on prévoit, comme résine synthétique, une résine synthétique sans agent moussant.

3. Corps composite selon l'une des revendications précédentes, caractérisé en ce que la strate intermédiaire (4) est constituée par un non-tissé de polyester comportant des microperles creuses dont le volume représente environ 50 % du volume du mat.

4. Corps composite selon l'une des revendications précédentes, caractérisé en ce que la strate intermédiaire (4) a une épaisseur de 1 à 3 mm, en particulier de 2 mm.

5. Corps composite selon l'une des revendications précédentes, caractérisé en ce que la strate de tissu sollicitée en traction dans le mat stratifié, lors d'une contrainte du corps composite, se présente sous la forme d'un tissu unidirectionnel et est disposée de façon que ses fibres soient dirigées dans la direction de traction.

6. Corps composite selon l'une des revendications précédentes, caractérisé en ce que les strates de tissu (2, 3) du mat stratifié (1) sont tissées à partir de fibres de verre, de fibres d'aramide, de fibres de polyamide, de fibres de polyester ou de fibres de carbone.

7. Procédé de fabrication d'un corps composite, en particulier d'une planche à voile ou de surf, selon l'une des revendications précédentes, dans lequel on fabrique un noyau de mousse et on le munit de tissu, puis l'on coule une résine synthétique durcissable liquide, des deux côtés du noyau de mousse, sur le tissu de fibres et l'on met à durcir le stratifié d'enveloppement ainsi formé sur le noyau de mousse dans un moule fermé, éventuellement déjà revêtu d'une couche superficielle thermoplastique, caractérisé en ce qu'on munit le noyau préfabriqué de tissu sous la forme d'un mat stratifié que l'on préfabrique en insérant un mat de non-tissé de mousse entre deux strates de tissu et l'on réunit ces trois strates par aiguillage, piquage ou collage.

8. Procédé de fabrication d'une planche à voile ou de surf selon la revendication 8, caractérisé en ce que l'on découpe le mat stratifié selon la vue en projection du noyau et l'on applique par aiguilletage un élément de mat respectivement sur la face supérieure et sur la face inférieure du noyau de mousse.
